(19)

Europäisches
Patentamt
European
Patent Office
Office européen
des brevets

(11) **EP 3 163 117 A1**

(12) **EUROPEAN PATENT APPLICATION**
published in accordance with Art. 153(4) EPC

(43) Date of publication:
**03.05.2017 Bulletin 2017/18**

(21) Application number: **15844272.3**

(22) Date of filing: **25.09.2015**

(51) Int Cl.:
**F16F 15/14** *(2006.01)*      **F16F 15/22** *(2006.01)*
**F16F 15/31** *(2006.01)*

(86) International application number:
**PCT/JP2015/077206**

(87) International publication number:
**WO 2016/047789 (31.03.2016 Gazette 2016/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **25.09.2014   JP 2014195005
31.03.2015   JP 2015071704**

(71) Applicant: **Aisin Aw Co., Ltd.
Anjo-shi, Aichi 444-1192 (JP)**

(72) Inventors:
• **TAKIKAWA, Yoshihiro
Anjo-shi
Aichi 444-1192 (JP)**

• **NAGAI, Hiroki
Anjo-shi
Aichi 444-1192 (JP)**
• **SAKAMOTO, Takao
Anjo-shi
Aichi 444-1192 (JP)**
• **WAJIMA, Masaki
Anjo-shi
Aichi 444-1192 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(54) **DAMPER DEVICE**

(57)      A four-bar linkage vibration absorbing device
(20) includes: crank members (21) each coupled to a
driven member (15) of a damper device via a coupling
shaft (A1) and each capable of swinging about the cou-
pling shaft (A1) when the driven member (15) is rotated;
and a mass body (23) that is coupled to the driven mem-
ber (15) via the crank members (21) and that swings
about the rotation center RC together with the crank
members (21) when the driven member (15) is rotated.
The driven member (15) is coupled to a turbine runner
of a hydraulic transmission device so as to rotate with
the turbine runner.

FIG. 2

## Description

TECHNICAL FIELD

The invention of the present disclosure relates to damper devices including at least an input element and an output element.

BACKGROUND ART

Conventionally, a dynamic damper is known in the art which includes: a linkage mechanism including a first link coupled to a crankshaft of an internal combustion engine and a second link coupled to the first link; and an annular inertial body coupled to the second link and coupled to the crank shaft via the linkage mechanism so that the inertial body can turn by a predetermined angle relative to the crank shaft (see, e.g., Patent Document 2). In this dynamic damper, the joint between the crank shaft and the first link is separated from the joint between the inertial body and the second link in the circumferential direction, and a mass body is formed in the first link. In this dynamic damper, when the crankshaft is rotated, a centrifugal force is applied to the first link and the second link of the linkage mechanism, and the first link and the second link subjected to the centrifugal force tend to keep their equilibrium positions. Accordingly, a force that keeps the linkage mechanism at its equilibrium position (force in the rotation direction) is applied to the inertial body. This force causes the inertial body to move in a manner substantially similar to that in the case where the inertial body is coupled to a rotary shaft via a spring member. The linkage mechanism thus functions as the spring member and the inertial body functions as the mass body, whereby torsional vibration of the crankshaft is reduced.

Related Art Documents

Patent Documents

Patent Document 1: Japanese Patent Application Publication No. 2001-263424 (JP 2001-263424 A)

SUMMARY OF THE INVENTION

The dynamic damper described in Patent Document 2 is used to damp vibration of the crankshaft of the internal combustion engine. The dynamic damper may be used in combination with a damper device including at least an input element and an output element. However, Patent Document 2 does not describe the dynamic damper combined with a damper device including at least an input element and an output element. In the case where the dynamic damper is combined with a damper device, it is necessary to properly couple the dynamic damper to the damper device in order to more satisfactorily damp vibration transmitted to the input element.

It is a primary object of the present disclosure to provide a damper device that can more satisfactorily damp vibration transmitted to an input element.

A damper device of the present disclosure is a damper device including an input element to which torque from an engine is transmitted, an intermediate element, an output element, a first elastic body that transmits the torque between the input element and the intermediate element, and a second elastic body that transmits the torque between the intermediate element and the output element. The damper device includes: a vibration damping device including a support member that coaxially rotates with the intermediate element or the output element, a restoring force generating member that is coupled to the support member via a coupling shaft and that can swing about the coupling shaft when the support member is rotated, and an inertial mass body that is coupled to the support member via the restoring force generating member and that swings about a rotation center of the support member together with the restoring force generating member when the support member is rotated.

By coupling the vibration damping device including the support member, the restoring force generating member, and the inertial mass body to the intermediate element or the output element as in this damper device, vibration of the intermediate element that tends to vibrate significantly between the first elastic body and the second elastic body can be damped by the vibration damping device, or vibration of the output element coupled to an object to which the torque is to be transmitted can be damped by the vibration damping device. Vibration transmitted to the input element can thus be very satisfactorily damped by the first and second elastic bodies and the vibration damping device.

BRIEF DESCRIPTION OF THE DRAWINGS

[FIG. 1] FIG. 1 is a schematic configuration diagram showing a starting device including a damper device of the present disclosure.
[FIG. 2] FIG. 2 is a front view of a vibration damping device included in the damper device of the present disclosure.
[FIG. 3] FIG. 3 is a partial sectional view of the vibration damping device shown in FIG. 2.
[FIG. 4] FIG. 4 is a schematic view showing a main part of the vibration damping device shown in FIGS 2 and 3.
[FIG. 5] FIG. 5 is a schematic view illustrating operation of the vibration damping device shown in FIGS 2 and 3.
[FIG. 6] FIG. 6 is a schematic view illustrating operation of the vibration damping device shown in FIGS 2 and 3.
[FIG. 7] FIG. 7 is a graph showing the relationship among the vibration order and the damping ratio of the vibration damping device and the inertia of components of the vibration damping device.

[FIG. 8] FIG. 8 is a graph showing the relationship among the vibration order and the damping ratio of the vibration damping device and the value Lg/S in the vibration damping device.

[FIG. 9] FIG. 9 is a graph showing comparison between vibration damping capability of the vibration damping device included in the damper device of the present disclosure and vibration damping capability of a centrifugal pendulum vibration absorbing device.

[FIG. 10] FIG. 10 is a front view of a vibration damping device according to a modification of the present disclosure.

[FIG. 11] FIG. 11 is a schematic view showing a vibration damping device according to another modification of the present disclosure.

[FIG. 12] FIG. 12 is a schematic configuration diagram showing a modification of the damper device of the present disclosure.

[FIG. 13] FIG. 13 is a schematic configuration diagram showing another modification of the damper device of the present disclosure.

[FIG. 14] FIG. 14 is a schematic configuration diagram showing still another modification of the damper device of the present disclosure.

MODES FOR CARRYING OUT THE INVENTION

Modes for carrying out the invention of the present disclosure will be described below with reference to the accompanying drawings.

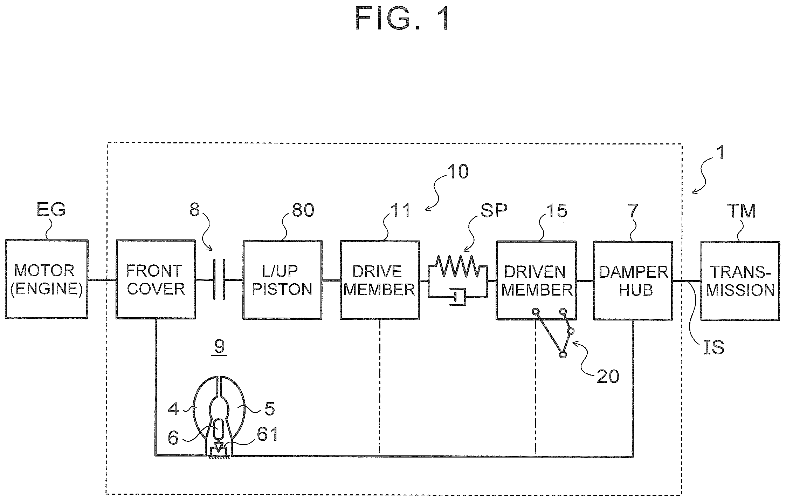

FIG. 1 is a schematic configuration diagram of a starting device 1 including a damper device 10 of the present disclosure. For example, the starting device 1 shown in the figure is mounted on a vehicle including an engine (internal combustion engine) EG serving as a drive device. The starting device 1 includes, in addition to the damper device 10 having a four-bar linkage vibration absorbing device 20 serving as a vibration damping device, a front cover 3 serving as an input member and coupled to a crankshaft (output shaft) of the engine EG, a pump impeller (input-side hydraulic transmission element) 4 fixed to the front cover 3 so as to rotate with the front cover 3, a turbine runner (output-side hydraulic transmission element) 5 that can rotate coaxially with the pump impeller 4, a damper hub 7 serving as an output member and fixed to an input shaft IS of a transmission (power transmission device) TM, which is an automatic transmission (AT), a continuously variable transmission (CVT), a dual clutch transmission (DCT), a hybrid transmission, or a speed reducer, a lockup clutch 8, which is a single-plate hydraulic clutch, etc.

In the following description, the "axial direction" basically refers to the direction in which the central axis (axis) of the starting device 1 or the damper device 10 (four-bar linkage vibration absorbing device 20) extends, unless otherwise specified. The "radial direction" basically refers to the radial direction of the starting device 1, the damper device 10, or rotary elements of the damper device 10 etc., namely a linear direction extending perpendicularly (in the direction of the radius) from the central axis of the starting device 1 or the damper device 10, unless otherwise specified. The "circumferential direction" basically refers to the circumferential direction of the starting device 1, the damper device 10, or the rotary elements of the damper device 10 etc., namely the direction along the rotation direction of the rotary elements, unless otherwise specified.

The pump impeller 4 has a pump shell, not shown, firmly fixed to the front cover 3, and a plurality of pump blades (not shown) disposed on the inner surface of the pump shell. The turbine runner 5 has a turbine shell, not shown, and a plurality of turbine blades (not shown) disposed on the inner surface of the turbine shell. An inner peripheral part of the turbine shell is fixed to the damper hub 7 via a plurality of rivets.

The pump impeller 4 and the turbine runner 5 face each other, and a stator 6 that adjusts the flow of hydraulic oil (working fluid) from the turbine runner 5 to the pump impeller 4 is coaxially placed between the pump impeller 4 and the turbine runner 5. The stator 6 has a plurality of stator blades, not shown, and the stator 6 is allowed to rotate only in one direction by a one-way clutch 61. The pump impeller 4, the turbine runner 5, and the stator 6 form a torus (annular flow path) in which hydraulic oil is circulated, and function as a torque converter (hydraulic transmission device) having a function to amplify torque. In the starting device 1, the stator 6 and the one-way clutch 61 may be omitted, and the pump impeller 4 and the turbine runner 5 may function as a fluid coupling.

The lockup clutch 8 performs a lockup operation, which is an operation of coupling the front cover 3 to the damper hub 7 via the damper device 10, and an operation of releasing the lockup coupling. In the present embodiment, the lockup clutch 8 is a single-plate hydraulic clutch and has a lockup piston 80, not shown, that is placed near an EG-side inner wall surface of the front cover 3 and that is fitted on the damper hub 7 so that the lockup piston 80 can move in the axial direction. A friction material is bonded to a front cover 3-side outer peripheral part of the surface of the lockup piston 80. A lockup chamber, not shown, that is connected to a hydraulic control device, not shown, via a hydraulic oil supply passage and an oil passage formed in the input shaft IS is defined between the lockup piston 80 and the front cover 3.

Hydraulic oil that is supplied from the hydraulic control device to the pump impeller 4 and the turbine runner 5 (torus) in the radially outward direction from the axis side of the pump impeller 4 and the turbine runner 5 (from the vicinity of the one-way clutch 61) via the oil passage formed in the input shaft IS etc. can flow into the lockup chamber of the lockup clutch 8. Accordingly, when the pressure in a hydraulic transmission chamber 9 defined by the front cover 3 and the pump shell of the pump impeller 4 and the pressure in the lockup chamber are kept equal to each other, the lockup piston 80 does not move toward the front cover 3 and the lockup piston 80 does not frictionally engage with the front cover 3. On the other hand, when the pressure in the lockup chamber is reduced by the hydraulic control device, not shown, the lockup piston 80 moves toward the front cover 3 due to the pressure difference and frictionally engages with the front cover 3. The front cover 3 (engine EG) is thus coupled to the damper hub 7 via the damper device 10. The lockup clutch 8 may be a multi-plate hydraulic clutch including at least one friction engagement plate (a plurality of friction materials).

As shown in FIG. 1, the damper device 10 includes, as the rotary elements, an annular drive member (input element) 11 coupled to the lockup piston 80 of the lockup clutch 8 so as to rotate therewith, and an annular driven member (output element) 15 coupled to the input shaft IS of the transmission TM. The damper device 10 further includes, as power transmission elements, a plurality of (e.g., four in the present embodiment) springs (elastic bodies) SP arranged at intervals in the circumferential direction on concentric circles. The springs SP are arc coil springs each made of a metal material wound so as to have an axis extending in an arc shape when not subjected to a load, or straight coil springs each made of a metal material wound in a helical shape so as to have an axis extending straight when not subjected to a load. The springs SP may be what is called double springs.

The drive member 11 serving as the input element of the damper device 10 includes an annular first input plate member that is placed near the lockup piston 80 (front cover 3), and an annular second input plate member that is placed closer to the pump impeller 4 and the turbine runner 5 so as to be located farther away from the lockup piston 80 than the first input plate member is, and that is coupled to the first input plate member via a plurality of rivets (both input plate members are not shown).

The first input plate member is rotatably supported by the damper hub 7, and is coupled to the lockup piston 80 so as to rotate therewith. The first input plate member has: a plurality of (e.g., four in the present embodiment) outer spring support portions each supporting (guiding) an outer peripheral part of a corresponding one of the springs SP from the front cover 3 (engine EG) side; a plurality of (e.g., four in the present embodiment) inner spring support portions each supporting (guiding) an inner peripheral part of a corresponding one of the springs SP from the front cover 3 side; and a plurality of (e.g., four in the present embodiment) spring contact portions (the outer and inner spring support portions and the spring contact portions are not shown). The second input plate member has: a plurality of (e.g., four in the present embodiment) outer spring support portions each supporting (guiding) an outer peripheral part of a corresponding one of the springs SP from the turbine runner 5 (transmission TM) side; a plurality of (e.g., four in the present embodiment) inner spring support portions each supporting (guiding) an inner peripheral part of a corresponding one of the springs SP from the turbine runner 5 side; and a plurality of (e.g., four in the present embodiment) spring contact portions (the outer and inner spring support portions and the spring contact portions are not shown).

When the first and second input plate members are coupled together, each outer spring support portion of the first input plate member faces a corresponding one of the outer spring support portions of the second input plate member, and each inner spring support portion of the first input plate member faces a corresponding one of the inner spring support portions of the second input plate member. The springs SP are supported by the first and second input plate members of the drive member 11, and for example, are arranged at intervals (at regular intervals) in the circumferential direction near the inner peripheral part of the turbine shell. When the damper device 10 is in a mounted state, each spring contact portion of the first and second input plate members is located between adjoining ones of the springs SP and contacts the ends of these adjoining springs SP.

The driven member 15 is placed between the first input plate member and the second input plate member of the drive member 11 and is fixed, together with the turbine shell of the turbine runner 5, to the damper hub 7 via a plurality of rivets or by welding. The driven member 15 is thus coupled to the input shaft IS of the transmission TM via the damper hub 7. The driven member 15 has a plurality of (e.g., four in the present embodiment) spring contact portions (not shown), and each of the spring contact portions can contact the ends of the springs SP associated therewith. When the damper device 10 is in the mounted state, each spring contact portion of the driven member 15 is located between adjoining ones of the springs SP and contacts the ends of these adjoining springs SP. The driven member 15 is thus coupled to the drive member 11 via the plurality of springs SP that operate in parallel.

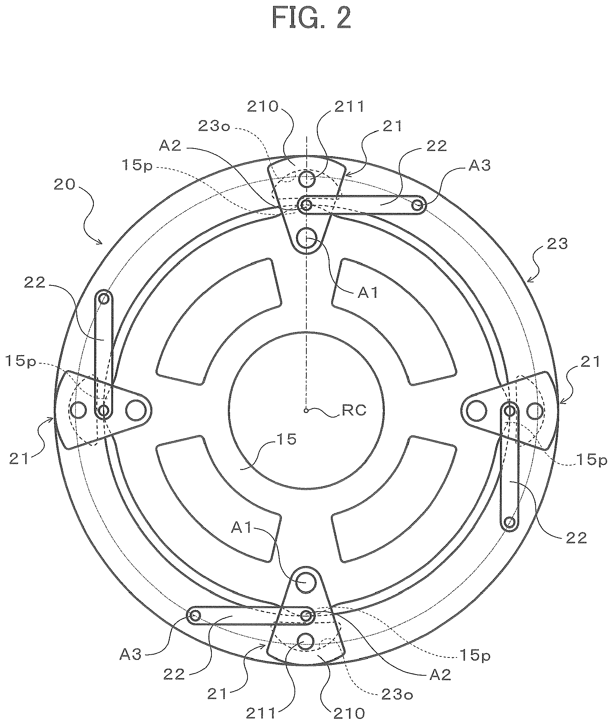

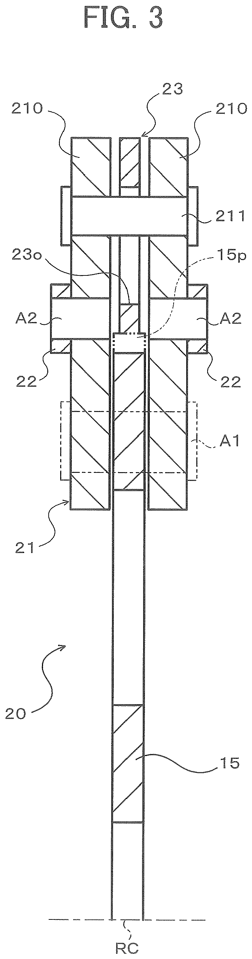

The four-bar linkage vibration absorbing device 20 is coupled to the driven member 15 of the damper device 10 configured as described above and is disposed in the hydraulic transmission chamber 9 filled with hydraulic oil. As shown in FIGS. 2 and 3, the four-bar linkage vibration absorbing device 20 includes the driven member 15 serving as a support member (first link), a plurality of (e.g., four in the present embodiment) crank members 21 serving as a restoring force generating member (second link), a plurality of (e.g., eight in total in the present embodiment) connecting rods 22 serving as a connecting member (third link), and a single annular mass body 23 serving as an inertial mass body (fourth link).

As shown in FIG. 3, each crank member 21 has two plate members 210. Each plate member 210 is a metal plate formed so as to be substantially in the shape of a fan and to be symmetrical with respect to the central axis of the plate member 210, as viewed in plan. The two plate members 210 face each other in the axial direction of the damper device 10 via the driven member 15 serving as the support member (first link) and are coupled together via a coupling shaft A1 fixed to or inserted through tapered base ends (at a position corresponding to the rivet of a fan) of the plate members 210 and a coupling member 211 (e.g., a rivet) fixed to the plate members 210 at a position radially outside the base ends. Each coupling shaft A1 is inserted through one of a plurality of coupling holes (circular holes) formed in an outer peripheral part of the driven member 15 serving as the first link at regular intervals (in the present embodiment, at intervals of 90°) about the axis of the driven member 15, namely about the rotation center (axis of rotation) RC of the driven member 15. Each crank member 21 (plate members 210) is thus coupled (pin-joined) to the driven member 15 so that the crank member 21 can rotate, namely swing, about the coupling shaft A1. As used herein, the central axis of the plate member 210 refers to a line segment passing through the center of gravity of the plate member 210 and the center of the coupling shaft A1. The coupling members 211 may be omitted from the crank members 21.

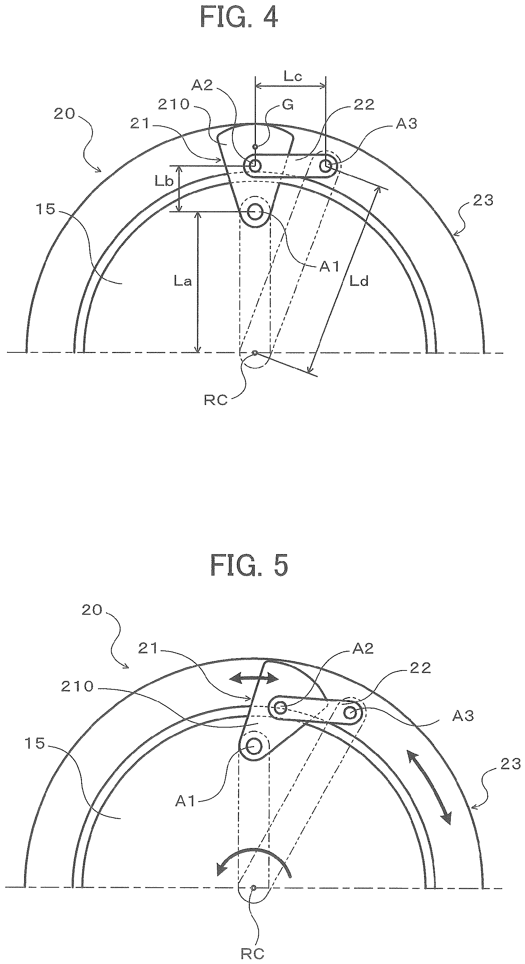

Each connecting rod 22 is a metal plate formed so as to have a narrow width. Each connecting rod 22 has its one end pivotally coupled (pin-joined) to a corresponding one of the plate members 210 of the crank members 21 via a coupling shaft A2. In the present embodiment, as shown in FIG. 4, the coupling shaft A2 is placed with respect to the crank member 21 (plate members 210) and the connecting rods 22 such that the center of the coupling shaft A2 is located on a straight line passing through the center of the coupling shaft A1 and the center of gravity G (e.g., near the coupling member 211) of the crank member 21 and is located closer to the center of the coupling shaft A1 than the center of gravity G is. That is, the center of gravity G of the crank member 21 is located farther away from the center of the coupling shaft A1 than the center of the coupling shaft A2 is on the straight line passing through the center of gravity G and the center of the coupling shaft A1.

The mass body 23 is an annular member of a metal plate. As shown in FIG. 2, the inside and outside diameters of the mass body 23 are larger than the outside diameter of the driven member 15. The mass body 23 has a plurality of (the same number as the number of crank members 21) coupling holes formed at regular intervals (in the present embodiment, at intervals of 90°) about the axis of the mass body 23. The mass body 23 is rotatably coupled (pin-joined) to the other ends of the plurality of connecting rods 22 via coupling shafts A3 inserted through the coupling holes. The mass body 23 is thus coupled to the driven member 15 serving as the support member via the plurality of connecting rods 22 and the plurality of crank members 21. The inner peripheral surface of the mass body 23 is in contact (sliding contact) with the outer peripheral surfaces of a plurality of (at least three, and in the present embodiment, e.g.,

four) projecting portions 15p formed in the outer peripheral part of the driven member 15. The annular mass body 23 is thus supported by the driven member 15 such that the center of the mass body 23 is located at the rotation center RC of the driven member 15 fixed to the damper hub 7. The mass body 23 can thus rotate about the rotation center RC. The four-bar linkage vibration absorbing device 20 can be made compact by supporting the mass body 23 (fourth link) by the driven member 15 (first link) in this manner. The mass body 23 has a plurality of (e.g., four in the present embodiment) clearance holes 23o formed at intervals (at regular intervals) in the circumferential direction so that the coupling members 211 of the crank members 21 are loosely fitted in the clearance holes 23o. In the case where the coupling members 211 are omitted from the crank members 21, the clearance holes 23o are omitted from the mass body 23. The weight of the mass body 23 is determined so that the mass body 23 is sufficiently heavier than the single crank member 21, is sufficiently heavier than the single connection rod 22, and is heavier than the total weight of the crank members 21 and the connecting rods 22.

In the four-bar linkage vibration absorbing device 20 configured as described above, the drive member 15 that serves as the first link (rotary element) and that is rotated by power from the engine EG and each crank member 21 rotatably coupled to the driven member 15 form a turning pair. The crank member 21 and each connecting rod 22 pivotally coupled to the crank member 21 form a turning pair. The mass body 23 and each connecting rod 22 form a turning pair as the mass body 23 is rotatably coupled to each connecting rod 22. The mass body 23 and the driven member 15 form a turning pair as the mass body 23 is rotatably supported by the driven member 15. That is, the driven member 15, each crank member 21, each connecting rod 22, and the mass body 23 form a quadric crank chain mechanism with the driven member 15 serving as a fixed link.

When each crank member 21 is in its equilibrium position, the rotation center RC of the driven member 15, the center of the coupling shaft A1 coupling the driven member 15 and the crank member 21, and the center of the coupling shaft A2 coupling the crank member 21 and the connecting rods 22 are located on a straight line as shown in FIG. 4. As used herein, the "equilibrium position" of the crank member 21 refers to the position where a centrifugal force that is applied to the crank member 21 when the driven member 15 (the first link, namely the rotary element) is rotated and a force that is applied to the crank member 21 in the direction from the center of gravity G (see FIG. 4) to the center of the coupling shaft A1 are balanced, namely a position where a perpendicular component of the force that is applied to the crank member 21 in the direction from the center of gravity G to the center of the coupling shaft A1 (a component in the direction perpendicular to the direction from the center of gravity G to the center of the coupling shaft A1) is zero when the centrifugal force is applied to the crank member 21.

As shown in FIG. 4, each crank member 21 (plate members 210) is formed so that the length Lb is shorter than the lengths La, Lc, and Ld, where "La" represents the length from the rotation center RC of the driven member 15 to the center of the coupling shaft A1 coupling the driven member 15 and the crank member 21 (plate members 210), "Lb" represents the length from the center of the coupling shaft A1 to the center of the coupling shaft A2 coupling the crank member 21 (plate members 210) and the connecting rods 22, "Lc" represents the length from the center of the coupling shaft A2 to the center of the coupling shaft A3 coupling the connecting rods 22 and the mass body 23, and "Ld" represents the length from the center of the coupling shaft A3 to the rotational center RC. The driven member 15, the crank members 21, the connecting rods 22, and the mass body 23 are formed so as to satisfy La + Lb < Lc + Ld. The length of each connecting rod 22 is made as long as possible within a range that does not affect operation of the crank member 21, the connecting rod 22, and the mass body 23.

As can be seen from FIG. 1, with the lockup coupling being released by the lockup clutch 8 of the starting device 1 configured as described above, torque (power) from the engine EG serving as a motor is transmitted to the input shaft IS of the transmission TM through a path formed by the front cover 3, the pump impeller 4, the turbine runner 5, and the damper hub 7. As can be seen from FIG. 1, with the lockup operation being performed by the lockup clutch 8, torque (power) from the engine EG is transmitted to the input shaft IS of the transmission TM through a path formed by the front cover 3, the lockup clutch 8 (lockup piston 80), the drive member 11, the springs SP, the driven member 15, and the damper hub 7.

When the drive member 11 coupled to the front cover 3 by the lockup clutch 8 is rotated with rotation of the engine EG while the lockup operation is being performed by the lockup clutch 8, each spring contact portion of the drive member 11 presses one end of a corresponding one of the springs SP, and the other end of each spring SP presses a corresponding one of the spring contact portions of the driven member 15. Torque transmitted from the engine EG to the front cover 3 is thus transmitted to the input shaft IS of the transmission TM, and fluctuation in torque from the engine EG is damped (absorbed) mainly by the springs SP of the damper device 10.

In the starting device 1, when the damper device 10 coupled to the front cover 3 by the lockup clutch 8 by the lockup operation is rotated with the front cover 3, the driven member 15 of the damper device 10 is also rotated in the same direction as the front cover 3 about the axis of the starting device 1. In the present embodiment, when the lockup operation is being performed, the crank members 21, the connecting rods 22, and the mass body 23 of the four-bar linkage vibration absorbing device 20 swing with respect to the driven member 15 according to the rotational speed of the driven member 15, whereby vibration of the driven member 15 is damped by the four-bar linkage vibration absorbing device 20. That is, the four-bar linkage vibration absorbing device 20 is configured so that the order of swing (vibration order q) of each crank member 21 and the mass body 23 is the same as the order of vibration that is transmitted from the engine EG to the driven member 15 (1.5th order in the case where the engine EG is, e.g., a three-cylinder engine, and second order in the case where engine EG is, e.g., a four-cylinder engine). The four-bar linkage vibration absorbing device 20 damps vibration that is transmitted from the engine EG to the driven member 15, regardless of the rotational speed of the engine EG (driven member 15). Vibration can thus be very satisfactorily damped by both the damper device 10 and the four-bar linkage vibration absorbing device 20 while restraining an increase in weight of the damper device 10.

Operation of the four-bar linkage vibration absorbing device 20 configured as described above will be described below.

As described above, the driven member 15, each crank member 21, each connecting rod 22, and the mass body 23 of the four-bar linkage vibration absorbing device 20 form a quadric crank chain mechanism with the driven member 15 serving as a fixed link. Accordingly, as shown in FIG. 5, when the driven member 15 is rotated in one direction (e.g., the counterclockwise direction in FIG. 5) about the rotation center RC, each crank member 21 is rotated in the opposite direction (e.g., the clockwise direction in FIG. 5) about the coupling shaft A1 with respect to the driven member 15 due to the moment of inertia (resistance to rotation) of the mass body 23. Since the motion of each crank member 21 is transmitted to the mass body 23 through the connecting rods 22, the mass body 23 is also rotated in the same direction as each crank member 21 (e.g., the clockwise direction in FIG. 5) about the rotation center RC of the driven member 15.

When the driven member 15 is rotated, each crank member 21 is subjected to a centrifugal force, and a component of the centrifugal force serves as a restoring force that tends to return the crank member 21 to its equilibrium position. The restoring force applied to each crank member 21 is transmitted to the mass body 23 through the connecting rods 22. Accordingly, if the restoring force applied to each crank member 21 and the mass body 23 overcomes the force (moment of inertia) that tends to rotate each crank member 21 and the mass body 23 in the above rotation direction, each crank member 21 and the mass body 23 are rotated in the opposite direction about the coupling shaft A1 or the rotation center RC.

As a result, when the driven member 15 is rotated in one direction, each crank member 21 swings (reciprocating rotary motion) about the coupling shaft A1 with respect to the driven member 15, and the motion of each crank member 21 is transmitted to the mass body 23 via the connecting rods 22. The mass body 23 thus swings (reciprocating rotary motion) in the same direction as each crank member 21 about the rotation center RC of the driven member 15. Since the relationship of La + Lb < Lc + Ld is satisfied in the four-bar linkage vibration absorbing device 20, there is no dead center in the quadric crank chain mechanism, and each crank member 21 (and the connecting rods 22) and the mass body 23 can be swung stably and smoothly. Vibration in opposite phase to vibration transmitted from the engine EG to the driven member 15 can thus be applied from the swinging mass body 23 (and the crank members 21 and the connecting rods 22) to the driven member 15 via the connecting rods 22 and the crank members 21.

Moreover, the length Lb is shorter than the lengths La, Lc, and Ld in the four-bar linkage vibration absorbing device 20 of the present embodiment. The driven member 15, each crank member 21, each connecting rod 22, and the mass body 23 thus form a lever crank mechanism that has the driven member 15 serving as a fixed link and that converts the swinging motion of each crank member 21 serving as a driver to the swinging motion of the mass body 23 serving as a follower via the connecting rods 22 serving as the connecting member.

Accordingly, in the four-bar linkage vibration absorbing device 20, when each crank member 21 located in its equilibrium position starts to swing with respect to the driven member 15, larger moment about the rotation center RC (force in the direction in which the connecting rods 22 extend) can be applied from each crank member 21 to the mass body 23 via the connecting rods 22 due to the boosting function of the lever crank mechanism. This can further increase the inertia of the mass body 23, whereby vibration damping capability of the four-bar linkage vibration absorbing device 20 can further be improved while restraining an increase in weight of the mass body 23.

As described above, when each crank member 21 is swinging, a component of the centrifugal force is applied to each crank member 21 as a restoring force that tends to return the crank member 21 to its equilibrium position. When each crank member 21 reaches one end of its swing range (when the deflection angle (swing angle) $\theta$ of each crank member 21 reaches its maximum value), a larger restoring force (moment) that tends to return the mass body 23 to its equilibrium position can be applied from each crank member 21 to the mass body 23 via the connecting rods 22 by the action of the lever crank mechanism. The "equilibrium position" of the mass body 23 is the position of the mass body 23 at the time each crank member 21 is in its equilibrium position.

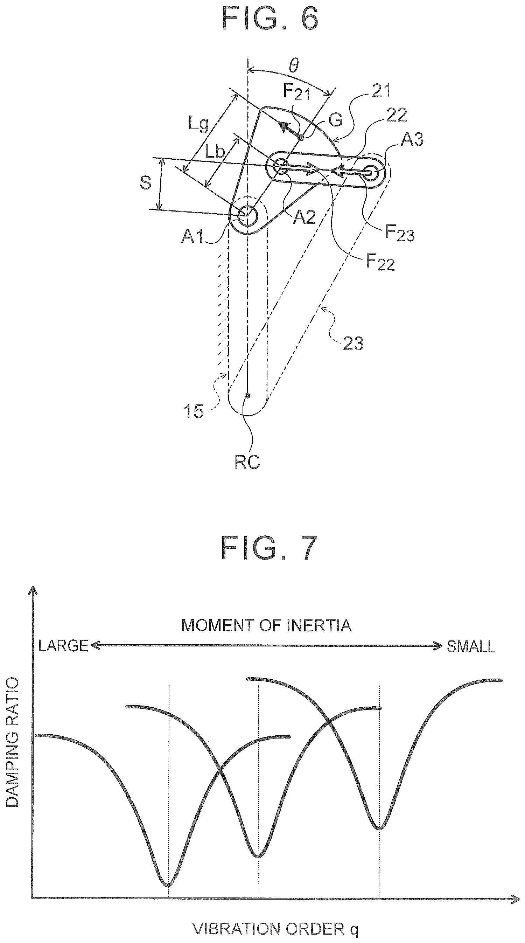

The boosting function of the four-bar linkage vibration absorbing device 20 will be described with reference to FIG. 6. The restoring force that is applied to each crank member 21 and the mass body 23 will be described below as an example. As shown in FIG. 6, when a component of the centrifugal force is applied as a restoring force $F_{21}$ to the center of gravity G of the crank member 21, a force $F_{22}$ in the direction in which the connecting rod 22 extends is applied from the crank member 21 to each connecting rod 22, whereby a reaction force of the force $F_{22}$, namely a restoring force $F_{23}$ that tends to return the mass body 23 to its equilibrium position, is applied to the center of each coupling shaft A3 in the mass body 23. At this time, the relationship of $F_{21} \cdot Lg = F_{23} \cdot S$ is satisfied, and the relational expression $F_{23} = F_{21} \cdot Lg/S$ is obtained from the relational expression $F_{21} \cdot Lg = F_{23} \cdot S$, where "Lg" represents the length from the center of the coupling shaft A1 coupling the driven member 15 and the crank member 21 to the center of gravity G of the crank member 21, and "S" represents the distance between the straight line passing through the centers of the coupling shafts A2, A3 and the straight line extending parallel to this straight line and passing through the center of the coupling shaft A1. As can be seen from FIG. 6, when each crank member 21 reaches one end of its swing range (when the deflection angle $\theta$ of each crank member 21 reaches its maximum value), the distance S is very short relative to the length Lg from the center of the coupling shaft A1 to the center of gravity G of the crank member 21. In the four-bar linkage vibration absorbing device 20, a large restoring force $F_{23}$ can therefore be applied from each crank member 21 to the mass body 23 via the connecting rods 22 when each crank member 21 reaches one end of its swing range.

In the four-bar linkage vibration absorbing device 20, the center of the coupling shaft A2 coupling each crank member 21 and the connecting rods 22 is located closer to the center of the coupling shaft A1 coupling the driven member 15 and each crank member 21 than the center of gravity G of each crank member 21 is. The distance Lg from the center of the coupling shaft A1 coupling the driven member 15 and each crank member 21 to the center of gravity G serving as the point of action of the force of each crank member 21 is thus longer than the distance Lb from the center of the coupling shaft A1 coupling the driven member 15 and each crank member 21 to the center of the coupling shaft A2 coupling each crank member 21 and the connecting rods 22. In the four-bar linkage vibration absorbing device 20, the value Lg/S can be increased and the boosting effect of the lever crank mechanism can further be enhanced, as compared to the case where the center of gravity G is located on the center of the coupling shaft A2 or is located closer to the center of the coupling shaft A1 than the center of the coupling shaft A2 is. In the four-bar linkage vibration absorbing device 20, a larger restoring force $F_{23}$ can be applied from each crank member 21 to the mass body 23 via the connecting rods 22.

The fact that a larger restoring force $F_{23}$ can be applied to the mass body 23 means that the four-bar linkage vibration absorbing device 20 has high torsional rigidity. The vibration order q in the four-bar linkage vibration absorbing device 20, namely the order of vibration that can be satisfactorily damped by the four-bar linkage vibration absorbing device 20, is given by

$q = \sqrt{(K/M)}$ , where "K" represents equivalent stiffness of the four-bar linkage vibration absorbing device 20 and "M" represents equivalent mass of the four-bar linkage vibration absorbing device 20. As shown in FIG. 7, the vibration damping ratio of the four-bar linkage vibration absorbing device 20 increases as the moment of inertia of the mass body 23 (fourth link), the crank member 21 (second link), etc., namely the equivalent mass M, increases. However, due to the relationship given by

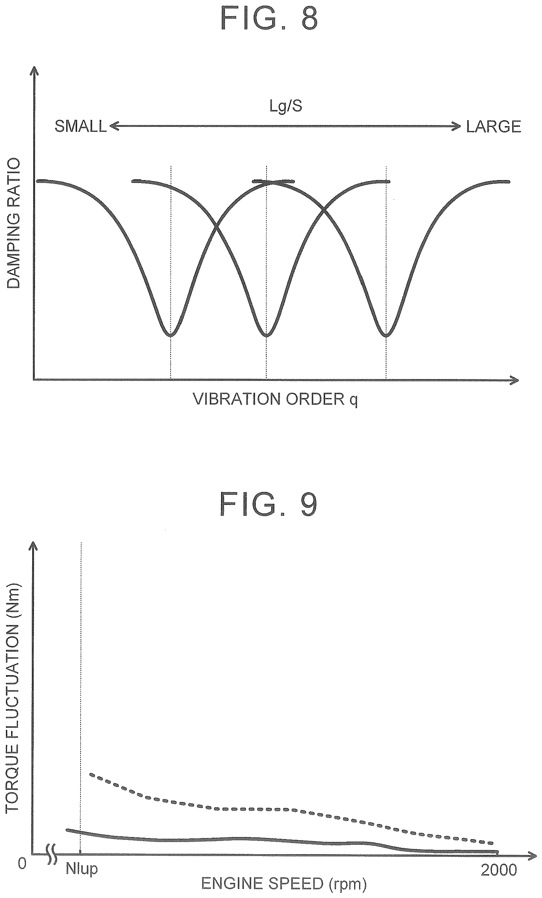

$q = \sqrt{(K/M)}$ , the vibration order q decreases as the moment of inertia of the mass body 23, the crank member 21, etc. increases. As shown in FIG. 8, even if the value Lg/S associated with the restoring force $F_{23}$, namely associated with the equivalent stiffness K, changes, the vibration damping ratio of the four-bar linkage vibration absorbing device 20 does not change so much. The vibration order q increases as the value Lg/S increases.

Accordingly, in the four-bar linkage vibration absorbing device 20 whose equivalent stiffness K can be increased so that a larger restoring force $F_{23}$ can be applied to the mass body 23, adjusting the equivalent mass M and the value Lg/S can ensure the weight and the moment of inertia (inertia) of the mass body 23 and thus improve the vibration damping capability without reducing the vibration order q, and can increase (maintain) the vibration order q without reducing the weight and the moment of inertia (inertia) of the mass body 23, namely without reducing the vibration damping capability. As a result, in the four-bar linkage vibration absorbing device 20, an increase in overall weight of the device can be restrained, and the vibration damping capability, and design flexibility, namely flexibility in setting the vibration order q, can further be improved.

Moreover, in the four-bar linkage vibration absorbing device 20, each crank member 21 (plate members 210) is formed so that its width, namely its dimension in the direction perpendicular to the straight line connecting the center of the coupling shaft A1 coupling the crank member 21 and the driven member 15 and the center of the coupling shaft A2 coupling the crank member 21 and the connecting rods 22, gradually increases from a coupling shaft A1-side end of the crank member 21 toward a coupling shaft A2-side end of the crank member 21 (the opposite end from the coupling shaft A1-side end). This can further increase the moment of inertia (inertia) of each crank member 21 while restraining an increase in weight of the crank member 21, and can further enhance the vibration damping effect of each crank member 21 that can also function as a mass body in a centrifugation pendulum vibration absorbing device. In addition, in the four-bar linkage vibration absorbing device 20, each crank member 21 includes at least one plate member 210 having the shape of a fan as viewed in plan. This makes it easy to form the crank member 21 whose moment of inertia (inertia) can be increased while restraining an increase in weight thereof.

At least a load due to the centrifugal force applied to the crank member 21 and the connecting rods 22 is applied to the vicinity of the coupling shaft A1 coupling the driven member 15 and the crank member 21. However, since an increase in weight of the crank member 21 is suppressed, this load is reduced, and an increase in size, which is associated with ensuring strength in the vicinity of a bearing portion of the driven member 15 supporting the coupling shaft A1, can therefore be suppressed. As described above, since the center of gravity G of the crank member 21 is located farther away from the center of the coupling shaft A1 than the center of the coupling shaft A2 is, a larger centrifugal force is applied to the crank member 21 as compared to the case where the center of gravity G is located on the center of the coupling shaft A2 or is located closer to the center of the coupling shaft A1 than the center of the coupling shaft A2 is. In the four-bar linkage vibration absorbing device 20, however, as described above, an increase in weight of the crank member 21 can be restrained, whereby the influence of the center of gravity G being located farther away from the center of the coupling shaft A1 than the center of the coupling shaft A2 is can be reduced. The restoring force $F_{23}$ that is applied from each crank member 21 to the mass body 23 depends more on the value Lg/S than the centrifugal force (restoring force $F_{21}$) that is applied to each crank member 21 does. It is therefore technically very significant to place the center of gravity G of the crank member 21 at a position located farther away from the center of the coupling shaft A1 than the center of the coupling shaft A2 is.

Moreover, since the mass body 23 of the four-bar linkage vibration absorbing device 20 is an annular member, the mass body 23 can be smoothly swung about the rotation center RC of the driven member 15 when each crank member 21 swings. Since the mass body 23 has an annular shape, the centrifugal force (centrifugal oil pressure) that is applied to the mass body 23 can be completely canceled out, whereby the influence of the centrifugal force on swinging of the mass body 23 can be eliminated. In addition, the annular mass body 23 is disposed radially outside the driven member 15 so as to surround the driven member 15, and is supported by the plurality of projecting portions 15p of the driven member 15 so that the mass body 23 can rotate about the rotation center RC. The moment of inertia of the mass body 23 can thus be increased while restraining an increase in weight of the mass body 23. Moreover, an increase in axial length of the four-bar linkage vibration absorbing device 20 can be restrained, whereby the entire device can be made compact. The plurality of projecting portions 15p may be omitted from the driven member 15 as long as the annular mass body 23 can be supported by the crank members 21 and the connecting rods 22 so that the mass body 23 can rotate about the rotation center RC.

In the four-bar linkage vibration absorbing device 20, the mass body 23 is coupled to the driven member 15 via the plurality of sets (in the present embodiment, four sets) of crank members 21 and connecting rods 22. The annular mass body 23 can therefore be smoothly swung about the rotation center RC. Moreover, the mass body 23 can be swung about the rotation center RC by swinging of each crank member 21 while restraining an increase in weight of the crank member 21 that swings with respect to the driven member 15. Furthermore, both the crank members 21 and the connecting rods 22 can be reduced in weight while ensuring the total weight of the plurality of sets of crank members 21, connecting rods 22, and mass body 23. Accordingly, durability of the crank members 21 and the connecting rods 22 can further be improved.

The driven member 15 of the damper device 10, to which the four-bar linkage vibration absorbing device 20 is coupled, is coupled to the turbine runner 5 via the damper hub 7 so as to rotate with the turbine runner 5. This substantially increases the moment of inertia (inertia) of the driven member 15 and can thus satisfactorily restrain the deflection angle of the mass body 23, which is associated with rotation of the driven member 15, from reaching the maximum deflection angle (swing limit) of the mechanism which is determined by the lengths La, Lb, Lc, and Ld. Satisfactory vibration damping capability of the four-bar linkage vibration absorbing device 20 can thus be maintained. The turbine runner 5 may be coupled directly to the driven member 15 or may be coupled to the drive member 11, as shown by long dashed double-short dashed lines in FIG. 1.

FIG. 9 shows the result of comparison between the vibration damping capability of the four-bar linkage vibration absorbing device 20 and the vibration damping capability of a centrifugal pendulum vibration absorbing device. This figure shows the result of simulation of torque fluctuation (vibration level) of the driven member with torque being transmitted from the engine EG to the drive member of the damper device by the lockup operation. Solid line in FIG. 9 shows the relationship between the engine speed and the torque fluctuation of the driven member 15 of the damper device 10 having the four-bar linkage vibration absorbing device 20 coupled to the driven member 15. Dashed line in FIG. 9 shows the relationship between the engine speed and the torque fluctuation of a driven member of a damper device having the centrifugal pendulum vibration absorbing device coupled to the driven member.

The weight of the mass body 23 in the model of the four-bar linkage vibration absorbing device 20 used in the simulation is 450 g, and the total weight of the plurality of crank members 21 and the plurality of connecting rods 22 is 400 g. The model of the centrifugal pendulum vibration absorbing device used in the simulation was produced based on such a well-known configuration as described in Patent Document 1, and the total weight of a plurality of mass bodies of the centrifugal pendulum vibration absorbing device is 1,100 g. The specifications of members other than the centrifugal pendulum vibration absorbing device of the damper device including the centrifugal pendulum vibration absorbing device are basically the same as the damper device 10 including the four-bar linkage vibration absorbing device 20, and the specifications of the engine EG used in the simulation are the same between the four-bar linkage vibration absorbing device 20 and the centrifugal pendulum vibration absorbing device.

As can be seen from the simulation result shown in FIG. 9, in the damper device 10 including the four-bar linkage vibration absorbing device 20, the vibration level of the driven member in a low engine speed range from a lockup engine speed Nlup (e.g., a value of 1,000 to 1,200 rpm) to, e.g., about 2,000 rpm can be more satisfactorily reduced as compared to the damper device including the centrifugal pendulum vibration absorbing device. The total weight of the mass bodies of the centrifugal pendulum vibration absorbing device used in the simulation is 1,100 g, whereas the total weight of the crank members 21, the connecting rods 22, and the mass body 23 of the four-bar linkage vibration absorbing device 20 used in the simulation is 850g. It should therefore be understood that, in the four-bar linkage vibration absorbing device 20, the vibration damping capability can be further improved while reducing the overall weight of the device (while restraining at least an increase in weight).

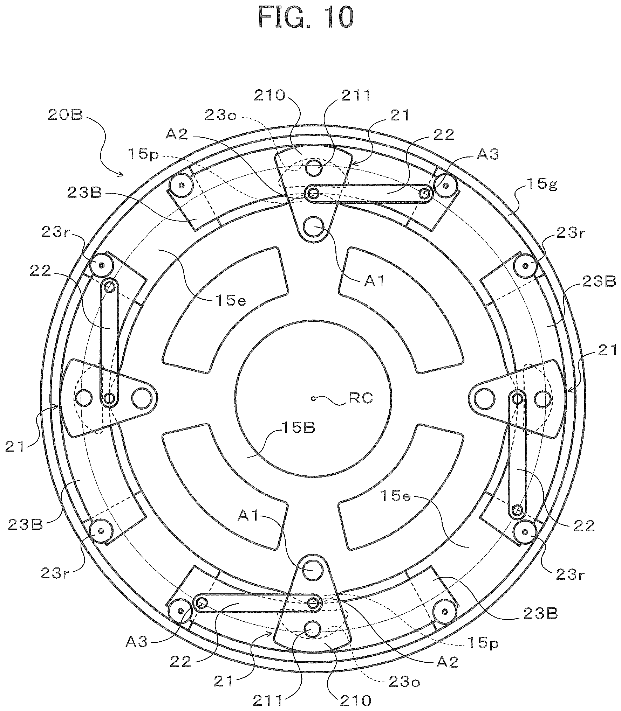

FIG. 10 is a front view of a four-bar linkage vibration absorbing device 20B according to a modification of the present disclosure. Of the components of the four-bar linkage vibration absorbing device 20B, the same components as those of the four-bar linkage vibration absorbing device 20 are denoted with the same reference characters, and description will not be repeated.

The four-bar linkage vibration absorbing device 20B shown in the figure includes a plurality of (e.g., four in the example of FIG. 10) mass bodies 23B having the same specifications (dimensions and), instead of the annular mass body (fourth link) 23 of the four-bar linkage vibration absorbing device 20. Each mass body 23B is formed from a metal plate and is formed in an arc shape, and is coupled to a driven member 15B via a crank member 21 (two plate members 210) and two connecting rods 22 so as to swing about the rotation center RC. When each crank member 21 is in its equilibrium position, the plurality of mass bodies 23B are located at intervals in the circumferential direction of the driven member 15B. Each mass body 23B, together with a corresponding one of the crank members 21, the connecting rods 22 associated therewith, and the driven member 15B serving as a first link (rotary element), forms a lever crank mechanism. The dimensions of each mass body 23B, each crank member 21, and each connecting rod 22, etc. are determined so that adjoining ones of the mass bodies 23B do not hit each other when they are swinging.

The driven member 15B serving as the first link has a plurality of extended portions 15e formed at intervals in the circumferential direction and extending outward in the radial direction, and a short cylindrical annular support portion 15g supported by the plurality of extended portions 15e so as to extend in the axial direction about the rotation center RC. A plurality of (in the example of FIG. 10, a total of two, one at each end of the mass body 23B) guide rollers 23r are rotationally attached to each mass body 23B so as to roll on the inner peripheral surface of the annular support portion 15g of the driven member 15B. The annular support portion 15g and the plurality of guide rollers 23r form a guide mechanism that is subjected to a centrifugal force (centrifugal oil pressure) applied to each mass body 23B and guides each mass body 23B so that each mass body 23B swings about the rotation center of the driven member 15B.

In such a four-bar linkage vibration absorbing device 20B including the plurality of mass bodies 23B as well, an increase in overall weight of the device can be restrained, and vibration damping capability and design flexibility can further be improved. In the four-bar linkage vibration absorbing device 20B including the plurality of mass bodies 23B, each mass body 23B is guided by the guide mechanism including the annular support portion 15g and the guide rollers 23r. The plurality of mass bodies 23B can thus be smoothly swung about the rotation center RC. Moreover, the annular support portion 15g of the guide mechanism is (integrally) formed in the rotary element of the damper device 10 to which the four-bar linkage vibration absorbing device 20B is coupled, namely in the drive driven device 15B. This can reduce the speed difference between the annular support portion 15g and each mass body 23B that swings, and thus can restrain an increase in sliding resistance. The annular support portion 15g may be formed in the rotary element of the damper device 10 to which the four-bar linkage vibration absorbing device 20B is not coupled. The guide mechanism is not limited to the one including the annular support portion 15g and the guide rollers 23r.

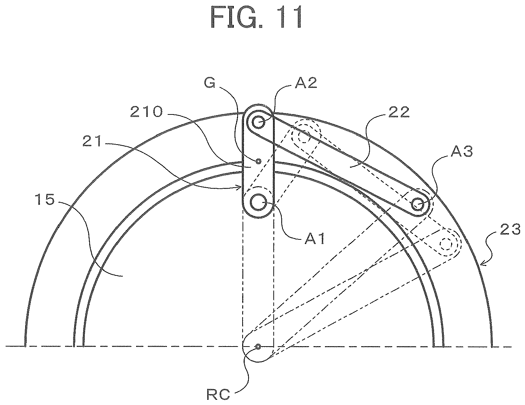

In the four-bar linkage vibration absorbing device 20, 20B, the center of the coupling shaft A2 coupling each crank member 21 and the connecting rods 22 is located closer to the center of the coupling shaft A1 coupling the driven member 15 and each crank member 21 than the center of gravity G of each crank member 21 is. However, the present disclosure is not limited to this. As shown in FIG. 11, the coupling shaft A2 may be placed so that its center is located farther away from the center of the coupling shaft A1 than the center of gravity G of each crank shaft 21 is, if a required boosting effect is obtained.

In the four-bar linkage vibration absorbing device 20, 20B, each crank member 21 (plate members 210) is formed so that its width increases from the coupling shaft A1-side end of the crank member 21 toward the coupling shaft A2-side end of the crank member 21. However, the present disclosure is not limited to this. As shown in FIG. 11, each crank member 21 (plate members 210) may have a constant width in the direction perpendicular to the straight line connecting the center of the coupling shaft A1 and the center of the coupling shaft A2. This can reduce the weight of each crank member 21.

Moreover, in the four-bar linkage vibration absorbing device 20, 20B, the driven member 15, 15B, the crank members 21, the connecting rods 22, and the mass body or bodies 23, 23B form a lever crank mechanism. However, the present disclosure is not limited to this. The driven member 15, 15B, the crank members 21, the connecting rods 22, and the mass body or bodies 23, 23B need not necessarily form a lever crank mechanism if a required boosting effect is obtained. The four-bar linkage vibration absorbing device 20, 20B may have a dedicated support member (first link) that swingably supports the crank member 21 and forms a turning pair with the crank member 21, and that forms a turning pair with the mass body 23, 23B. That is, the crank member 21 may be indirectly coupled to the rotary element of the damper device 10 via the dedicated support member serving as the first link. In this case, the support member of the four-bar linkage vibration absorbing device 20, 20B needs only to be coupled to the rotary element whose vibration is to be damped, such as the driven member 15 of the damper device 10, so that the support member coaxially rotates with the rotary element. Vibration of the rotary element can also be satisfactorily damped by the four-bar linkage vibration absorbing device 20, 20B configured as described above.

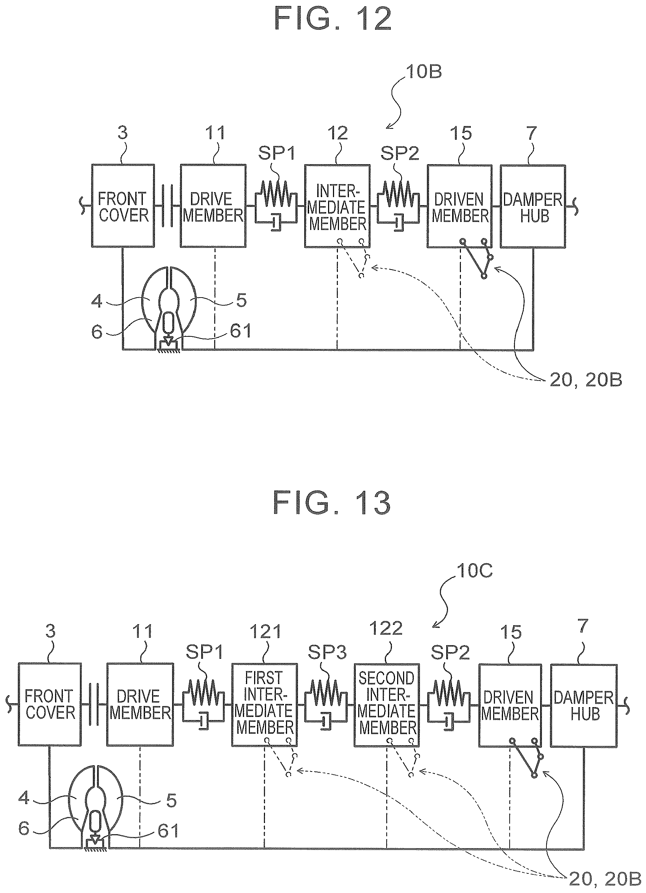

In such a damper device 10B as shown in FIG. 12 which includes, as rotary elements, a drive member (input element) 11, an intermediate member 12 (intermediate element), and a driven member 15 (output element) and includes, as power transmission elements, a first spring SP1 disposed between the drive member 11 and the intermediate member 12 to transmit torque therebetween and a second spring SP2 disposed between the intermediate member 12 and the driven member 15 to transmit torque therebetween, the four-bar linkage vibration absorbing device 20, 20B may be coupled to the driven member 15 or may be coupled to the intermediate member 12, as shown in FIG. 12.

By coupling the four-bar linkage vibration absorbing device 20, 20B to the driven member 15 of the damper device 10B as shown in FIG. 12, vibration of the driven member 15 coupled to the input shaft of the transmission to which torque is to be transmitted can be satisfactorily damped by the four-bar linkage vibration absorbing device 20, 20B. By coupling the four-bar linkage vibration absorbing device 20, 20B to the intermediate member 12, vibration of the intermediate member 12 that tends to vibrate significantly between the first spring SP1 and the second spring SP2 can be satisfactorily damped by the four-bar linkage vibration absorbing device 20, 20B. That is, by coupling the four-bar linkage vibration absorbing device 20, 20B to the intermediate member 12 or the driven member 15, vibration transmitted to the drive member 11 can be very satisfactorily damped by the first and second springs SP1, SP2 and the four-bar linkage vibration absorbing device 20, 20B while restraining an increase in weight of the damper device 10B.

In the case where the four-bar linkage vibration absorbing device 20, 20B is coupled to the driven member 15 of the damper device 10B, the turbine runner 5 may be coupled directly to the driven member 15 or may be coupled to the driven member 15 via the damper hub 7 so as to rotate with the driven member 15. This substantially increases the moment of inertia (inertia) of the driven member 15 and can thus satisfactorily restrain the deflection angle of the mass body 23, which is associated with rotation of the driven member 15, from reaching the maximum deflection angle (swing limit) of the mechanism. As a result, satisfactory vibration damping capability of the four-bar linkage vibration absorbing device 20, 20B can be maintained. In the case where the four-bar linkage vibration absorbing device 20, 20B is coupled to the intermediate member 12 of the damper device 10B, the turbine runner 5 may be coupled directly to the driven member 15 or may be coupled to the driven member 15 via the damper hub 7 so as to rotate with the driven member 15. Vibration of the intermediate member 12 that tends to vibrate significantly between the first and second springs SP1, SP2 is thus satisfactorily damped by the four-bar linkage vibration absorbing device 20, 20B. Moreover, the moment of inertia (inertia) of the driven member 15 is substantially increased, and thus the vibration level of the driven member 15 can be reduced.

In the case where the four-bar linkage vibration absorbing device 20, 20B is coupled to the driven member 15 of the damper device 10B, the turbine runner 5 may be coupled to the intermediate member 12. This substantially increases the moment of inertia (inertia) of the intermediate member 12 located upstream of the driven member 15 on a torque transmission path of the damper device 10B, and can thus reduce the vibration level of the intermediate member 12, namely the level of vibration that is transmitted from the intermediate member 12 to the driven member 15. Vibration of the driven member 15 can thus be more satisfactorily damped by the four-bar linkage vibration absorbing device 20, 20B while restraining an increase in weight of the crank member 21, the mass body 23, etc. In the case where the four-bar linkage vibration absorbing device 20, 20B is coupled to the intermediate member 12 of the damper device 10B, the turbine runner 5 may be coupled to the intermediate member 12 so as to rotate therewith. This substantially increases the moment of inertia (inertia) of the intermediate member 12 and can thus satisfactorily restrain the deflection angle of the mass body 23, which is associated with rotation of the intermediate member 12, from reaching the maximum deflection angle (swing limit) of the mechanism. As a result, satisfactory vibration damping capability of the four-bar linkage vibration absorbing device 20, 20B can be maintained.

In the damper device 10B, the drive member 11 may be coupled to the turbine runner 5 so as to rotate therewith. This substantially increases the moment of inertia (inertia) of the drive member 11 located upstream of the intermediate member 12 and the driven member 15 on the torque transmission path of the damper device 10B, and can thus reduce the vibration level of the drive member 11, namely the level of vibration that is transmitted to the intermediate member 12 and the driven member 15. Vibration of the intermediate member 12 and the driven member 15 can thus be more satisfactorily damped by the four-bar linkage vibration absorbing device 20, 20B while restraining an increase in weight of the crank member 21, the mass body 23, etc.

In such a damper device 10C as shown in FIG. 13 which includes, as rotary elements, a drive member (input element) 11, a first intermediate member (first intermediate element) 121, a second intermediate member (second intermediate element) 122, and a driven member (output element) 15 and includes, as power transmission elements, a first spring SP1 disposed between the drive member 11 and the first intermediate member 121 to transmit torque therebetween, a second spring SP2 disposed between the second intermediate member 122 and the driven member 15 to transmit torque therebetween, and a third spring SP3 disposed between the first intermediate member 121 and the second intermediate member 122 to transmit torque therebetween, the four-bar linkage vibration absorbing device 20, 20B may be coupled to the driven member 15 or may be coupled to the first intermediate member 121 or the second intermediate member 122, as shown in FIG. 13.

By coupling the four-bar linkage vibration absorbing device 20, 20B to the driven member 15 of the damper device 10C, vibration of the driven member 15 coupled to the input shaft of the transmission to which torque is to be transmitted can be satisfactorily damped by the four-bar linkage vibration absorbing device 20, 20B. By coupling the four-bar linkage vibration absorbing device 20, 20B to the first or second intermediate member 121, 122, vibration of the first or second intermediate member 121, 122 that tends to vibrate significantly between the first and second springs SP1, SP2 or between the second and third springs SP2, SP3 can be satisfactorily damped by the four-bar linkage vibration absorbing device 20, 20B. That is, by coupling the four-bar linkage vibration absorbing device 20, 20B to the driven member 15, the first intermediate member 121, or the second intermediate member 122 of the damper device 10C, vibration transmitted to the drive member 11 can be very satisfactorily damped by the first to third springs SP1, SP2, SP3 and the four-bar linkage vibration absorbing device 20, 20B while restraining an increase in weight of the damper device 10C.

In the damper device 10C, the turbine runner 5 may be coupled to any of the drive member 11, the first and second intermediate members 121, 122, and the driven member 15. That is, coupling the drive member 11 to the turbine runner 5 so that the drive member 11 rotates with the turbine runner 5 substantially increases the moment of inertia (inertia) of the drive member 11 located upstream of the first and second intermediate members 121, 122 and the driven member 15 on a torque transmission path of the damper device 10C, and can thus reduce the vibration level of the drive member 11, namely the level of vibration that is transmitted to the first intermediate member 121, the second intermediate member 122, and the driven member 15. By coupling both the four-bar linkage vibration absorbing device 20, 20B and the turbine runner 5 to any of the first intermediate member 121, the second intermediate member 122, and the driven member 15 of the damper device 10C, the deflection angle of the mass body 23, which is associated with rotation of the first intermediate member 121, the second intermediate member 122, or the driven member 15, can be satisfactorily restrained from reaching the maximum deflection angle (swing limit) of the mechanism, and satisfactory vibration damping capability of the four-bar linkage vibration absorbing device 20, 20B can be maintained. In the case where the four-bar linkage vibration absorbing device 20, 20B is coupled to the first or second intermediate member 121, 122 of the damper device 10C, the turbine runner 5 may be coupled directly to the driven member 15 or may be coupled to the driven member 15 via the damper hub 7 so as to rotate with the driven member 15. Vibration of the first or second intermediate member 121, 122 is thus satisfactorily damped by the four-bar linkage vibration absorbing device 20, 20B. Moreover, the moment of inertia (inertia) of the driven member 15 is substantially increased, and thus the vibration level of the driven member 15 can be reduced.

The damper device 10, 10B, 10C includes a single torque transmission path between the drive member 11 and the driven member 15. However, the present disclosure is not limited to this. For example, the damper device 10 may include, in addition to a first torque transmission path formed by the drive member 11, the spring SP, and the driven member 15, a second torque transmission path that operates in parallel with the first torque transmission path. The damper device 10B may include, in addition to a first torque transmission path formed by the drive member 11, the first spring SP1, the intermediate member 12, the second spring SP2, and the driven member 15, at least one of a second torque transmission path that operates in parallel with the first torque transmission path and a third torque transmission path branching off from an intermediate part of the first or second torque transmission path and extending to the driven member 15. The damper device 10C may include, in addition to a first torque transmission path formed by the drive member 11, the first spring SP1, the first intermediate member 121, the third spring SP3, the second intermediate member 122, the second spring SP2, and the driven member 15, at least one of a second torque transmission path that operates in parallel with the first torque transmission path and a third torque transmission path branching off from an intermediate part of the first or second torque transmission path and extending to the driven member 15.

Large vibration from the engine EG is transmitted to the drive member 11 of the damper device 10, 10B, 10C almost without being damped. Accordingly, if the four-bar linkage vibration absorbing device 20, 20B is coupled to the drive member 11, the deflection angle of the mass body 23, which is associated with rotation of the drive member 11, tends to reach the maximum deflection angle (swing limit) of the mechanism, and vibration damping capability of the four-bar linkage vibration absorbing device 20, 20B may not be effectively provided. It is therefore preferable that the four-bar linkage vibration absorbing device 20, 20B be coupled to the driven member 15, the intermediate member 12, or the first or second intermediate member 121, 122 of the damper device 10, 10B, 10C as described above.

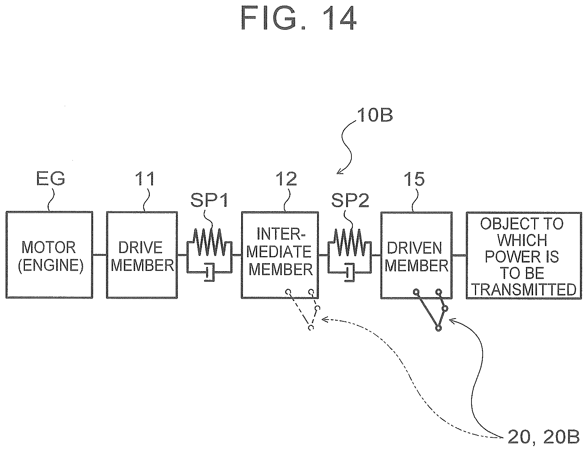

The damper device 10, 10B, 10C including the four-bar linkage vibration absorbing device 20, 20B is herein applied to the starting device 1 including the hydraulic transmission device (torque converter), the lockup clutch 8, etc. However, the damper device 10, 10B, 10C including the four-bar linkage vibration absorbing device 20, 20B may be applied to devices other than the starting device 1. For example, as shown in FIG. 14, the drive member 11 of the damper device 10B may be coupled (directly) to the output shaft of the engine (motor) EG, and the driven member 15 of the damper device 10B may be coupled to an object to which power of the engine EG is to be transmitted. That is, the damper device 10, 10B, 10C is disposed between the engine and the object to which power is to be transmitted, and is useful for damping vibration from the engine.

As described above, the damper device of the present disclosure is a damper device (10B, 10C) including an input element (11) to which torque from an engine (EG) is transmitted, an intermediate element (12, 121, 122), an output element (15, 15B), a first elastic body (SP1) that transmits the torque between the input element (11) and the intermediate element (12, 121), and a second elastic body (SP2) that transmits the torque between the intermediate element (12, 122) and the output element (15, 15B). The damper device (10B, 10C) includes: a vibration damping device (20, 20B) including a support member (15, 15B) that coaxially rotates with the intermediate element (12, 121, 122) or the output element (15, 15B), a restoring force generating member (21) that is coupled to the support member (15, 15B) via a coupling shaft (A1) and that can swing about the coupling shaft (A1) when the support member (15, 15B) is rotated, and an inertial mass body (23) that is coupled to the support member (15, 15B) via the restoring force generating member (21) and that swings about a rotation center (RC) of the support member (15, 15B) together with the restoring force generating member (21) when the support member (15, 15B) is rotated.

By coupling the vibration damping device including the support member, the restoring force generating member, and the inertial mass body to the intermediate element or the output element as in this damper device, vibration of the intermediate element that tends to vibrate significantly between the first elastic body and the second elastic body can be damped by the vibration damping device, or vibration of the output element coupled to an object to which the torque is to be transmitted can be damped by the vibration damping device. Vibration transmitted to the input element can thus be very satisfactorily damped by the first and second elastic bodies and the vibration damping device. The support member of the vibration damping device may be the intermediate element itself or the output element itself of the damper device or may be a part (constituent member) of the intermediate element or the output element. The support member of the vibration damping device may be a separate member from the intermediate element or the output element.

The support member of the vibration absorbing device (20, 20B) may rotate with the output element (15, 15B), and the output element (15, 15B) may be coupled to a turbine runner (5) of a hydraulic transmission device so as to rotate with the turbine runner (5). In the case where the support member of the vibration damping device rotates with the output element, the turbine runner may be coupled to the output element. This substantially increases the moment of inertia (inertia) of the output element and can thus satisfactorily restrain the deflection angle of the inertial mass body, which is associated with rotation of the support member (output element), from reaching the maximum value (swing limit) of the mechanism. Satisfactory vibration damping capability of the vibration damping device can thus be maintained.

The support member of the vibration damping device (20, 20B) may rotate with the intermediate element (12), and the intermediate element (12) may be coupled to the turbine runner (5) of the hydraulic transmission device so as to rotate with the turbine runner (5). In the case where the support member of the vibration damping device rotates with the intermediate element, the turbine runner may be coupled to the intermediate element. This substantially increases the moment of inertia (inertia) of the intermediate element and can thus satisfactorily restrain the deflection angle of the inertial mass body, which is associated with rotation of the support member (intermediate element), from reaching the maximum value (swing limit) of the mechanism. Satisfactory vibration damping capability of the vibration damping device can thus be maintained.

The support member of the vibration damping device (20, 20B) may rotate with the output element (15, 15B), and the input element (11) or the intermediate element (12) may be coupled to the turbine runner (5) of the hydraulic transmission device so as to rotate with the turbine runner (5). In the case where the support member of the vibration damping device rotates with the output element, the turbine runner may be coupled to the input element or the intermediate element. This substantially increases the moment of inertia (inertia) of the input element or the intermediate element located upstream of the output element in a torque transmission path of the damper device, and can thus reduce the vibration level of the input element or the intermediate element, namely the level of vibration that is transmitted from the input element or the intermediate element to the output element. Vibration of the output element can thus be more satisfactorily damped by the vibration damping device.

The support member of the vibration damping device may rotate with the intermediate element, and the input element may be coupled to the turbine runner of the hydraulic transmission device so as to rotate with the turbine runner. In the case where the support member of the vibration damping device rotates with the intermediate element, the turbine runner may be coupled to the input element. This substantially increases the moment of inertia (inertia) of the input element located upstream of the intermediate element in the torque transmission path of the damper device, and can thus reduce the vibration level of the input element, namely the level of vibration that is transmitted from the input element to the output element. Vibration of the output element can thus be more satisfactorily damped by the vibration damping device.

The support member of the vibration damping device (20, 20B) may rotate with the intermediate element (12), and the output element (15, 15B) may be coupled to the turbine runner (5) of the hydraulic transmission device so as to rotate with the turbine runner (5). In the case where the support member of the vibration damping device rotates with the intermediate element, the turbine runner may be coupled to the output element. Vibration of the intermediate member that tends to vibrate significantly between the first elastic body and the second elastic body is thus damped by the vibration damping device. Moreover, the moment of inertia (inertia) of the output element is substantially increased, and thus the vibration level of the output element can be reduced.

The intermediate element may include the first and second intermediate elements (121, 122), the damper device (10C) may include a third elastic body (SP3) that transmits the torque between the first intermediate element (121) and the second intermediate element (12), and the first elastic body (SP1) may transmit the torque between the input element (11) and the first intermediate element (121), and the second elastic body (SP2) may transmit the torque between the second intermediate element (122) and the output element (15, 15B). In the damper device including the first and second intermediate elements, the support member of the vibration damping device may rotate with the first or second intermediate element or may rotate with the output element. The turbine runner of the hydraulic transmission device may be coupled to the first or second intermediate element so as to rotate therewith.

The inertial mass body (23) may be an annular member disposed so as to surround the support member (15) and may be rotatably supported by the support member (15). By supporting the inertial mass body with the support member, the vibration damping device can be made compact, and the inertial mass body can be smoothly swung about the rotation center of the support member when the restoring force generating member swings. Moreover, since the inertial mass body has an annular shape, the influence of a centrifugal force (centrifugal oil pressure) that is applied to the inertial mass body on swinging of the inertial mass body can be eliminated. In addition, since the annular inertial mass body is disposed radially outside the support member, the moment of inertia of the inertial mass body can be increased while restraining an increase in weight of the inertial mass body. An increase in axial length of the vibration damping device can also be restrained.

The vibration damping device (20B) may include a plurality of the inertial mass bodies (23B), and each of the inertial mass bodies (23B) may be coupled to a support member (15B) via the restoring force generating member (21). The use of this configuration can also restrain an increase in overall weight of the device and can further improve vibration damping capability and design flexibility of the vibration damping device.

The vibration damping device (20B) may further include a guide mechanism (15g, 23r) that guides each of the plurality of the inertial mass bodies (23B) so that each of the plurality of the inertial mass bodies (23B) swings about the rotation center (RC) of the support member (15B). The plurality of the inertial mass bodies can thus be smoothly swung about the rotational center.

The vibration damping device (20, 20B) may further include a connecting member (22) that is rotatably coupled to the restoring force generating member (21) via a second coupling shaft (A2) and that is rotatably coupled to the inertial mass body (23) via a third coupling shaft (A3). In such a vibration damping device, the support member, the restoring force generating member, the connecting member, and the inertial mass body form a quadric crank chain mechanism with the support member (rotary element) serving as a fixed link. Accordingly, when the support member is rotated, vibration in opposite phase to vibration of the intermediate element or the output element can be applied from the inertial mass body to the intermediate element or the output element, which rotates with the support member, via the connecting member and the restoring force generating member.

The center of the second coupling shaft (A2) may be located closer to the center of the coupling shaft (A1) than the center of gravity (G) of the restoring force generating member (21) is. Since the center of the second coupling shaft coupling the restoring force generating member and the connecting member is thus located closer to the center of the coupling shaft coupling the support member and the restoring force generating member than the center of gravity of the restoring force generating member is, the distance from the center of the coupling shaft coupling the support member and the restoring force generating member to the point of action (center of gravity) of the force of the restoring force generating member is longer than the distance from the center of the coupling shaft to the center of the second coupling shaft. This further enhances a boosting effect of the quadric crank chain mechanism (lever crank mechanism), and a larger restoring force (moment) can be applied from the restoring force generating member to the inertial mass body via the connecting member. Equivalent stiffness of the vibration damping device can thus be increased. The weight and the moment of inertia (inertia) of the inertial mass body can be ensured and thus the vibration damping capability can be improved without reducing the vibration order, namely the order of vibration that can be satisfactorily damped by the vibration damping device, and the vibration order can be increased (maintained) without reducing the weight and the moment of inertia of the inertial mass body, namely without reducing the vibration damping capability.

The restoring force generating member (21) may be formed so that its width gradually increases from a coupling shaft (A1)-side end of the restoring force generating member (21) toward an opposite end of the restoring force generating member (21) from the end. This can further increase the moment of inertia (inertia) of the restoring force generating member while restraining an increase in weight of the restoring force generating member, and can further enhance the vibration damping effect of the restoring force generating member. At least a load due to the centrifugal force applied to the restoring force generating member is applied to the vicinity of the coupling shaft coupling the support member and the restoring force generating member. However, since an increase in weight of the restoring force generating member is suppressed, this load is reduced, and an increase in size, which is associated with ensuring strength in the vicinity of the coupling shaft coupling the support member and the restoring force generating member, can therefore be suppressed. An increase in overall weight and size of the vibration damping device can thus be restrained.

The restoring force generating member (21) may include at least one plate member (210) having the shape of a fan as viewed in plan. This makes it easy to form the restoring force generating member whose moment of inertia (inertia) can be increased while restraining an increase in weight thereof.

The output element (15, 15B) may be operatively (directly or indirectly) coupled to an input shaft (Is) of a transmission (TM).

Another damper device of the present disclosure is a damper device (10) including an input element (11) to which torque from an engine (EG) is transmitted, an output element (15, 15B), and an elastic body (SP) that transmits the torque between the input element (11) and the output element (15, 15B). The damper device (10) includes: a vibration damping device (20, 20B) including a support member (15, 15B) that coaxially rotates with the output element (15, 15B), a restoring force generating member (21) that is coupled to the support member (15, 15B) via a coupling shaft (A1) and that can swing about the coupling shaft (A1) when the support member (15, 15B) is rotated, and an inertial mass body (23) that is coupled to the support member (15, 15B) via the restoring force generating member (21) and that swings about a rotation center (RC) of the support member (15, 15B) together with the restoring force generating member (21) when the support member (15, 15B) is rotated.

By coupling the vibration damping device including the support member, the restoring force generating member, and the inertial mass body to the output element as in this damper device, vibration of the output element coupled to an object to which the torque is to be transmitted can be damped by the vibration damping device. Vibration transmitted to the input element can thus be very satisfactorily damped by the elastic body and the vibration damping device. The support member of the vibration damping device may be the output element itself of the damper device or may be a part (constituent member) of the output element. The support member of the vibration damping device may be a separate member from the output element.

The output element (15, 15B) may be coupled to a turbine runner (5) of a hydraulic transmission device so as to rotate with the turbine runner (5). This substantially increases the moment of inertia (inertia) of the output element and can thus satisfactorily restrain the deflection angle of the inertial mass body, which is associated with rotation of the support member (output element), from reaching the maximum value (swing limit) of the mechanism. Satisfactory vibration damping capability of the vibration damping device can thus be maintained.

It should be understood that the invention of the present disclosure is not limited in any way to the above embodiment, and various modifications can be made without departing from the spirit and scope of the present disclosure. The above modes for carrying out the invention are merely shown as specific forms of the invention described in "SUMMARY OF THE INVENTION" and are not intended to limit the elements of the invention described in "SUMMARY OF THE INVENTION."

INDUSTRIAL APPLICABILITY

The invention of the present disclosure is applicable to the manufacturing field of vibration damping devices that damp vibration of a rotary element, etc.

**Claims**

1. A damper device including an input element to which torque from an engine is transmitted, an intermediate element, an output element, a first elastic body that transmits the torque between the input element and the intermediate element, and a second elastic body that transmits the torque between the intermediate element and the output element, comprising:

    a vibration damping device including a support member that coaxially rotates with the intermediate element or the output element, a restoring force generating member that is coupled to the support member via a coupling shaft and that can swing about the coupling shaft when the support member is rotated, and an inertial mass body that is coupled to the support member via the restoring force generating member and that swings about a rotation center of the support member together with the restoring force generating member when the support member is rotated.

2. The damper device according to claim 1, wherein the support member of the vibration damping device rotates with the output element, and the output element is coupled to a turbine runner of a hydraulic transmission device so as to rotate with the turbine runner.

3. The damper device according to claim 1, wherein the support member of the vibration damping device rotates with the intermediate element, and the intermediate element is coupled to a turbine runner of a hydraulic transmission device so as to rotate with the turbine runner.

4. The damper device according to claim 1, wherein the support member of the vibration damping device rotates with the output element, and the input element or the intermediate element is coupled to a turbine runner of a hydraulic transmission device so as to rotate with the turbine runner.

5. The damper device according to claim 1, wherein the support member of the vibration damping device rotates with the intermediate element, and the input element is coupled to a turbine runner of a hydraulic transmission device so as to rotate with the turbine runner.

6. The damper device according to claim 1, wherein the support member of the vibration damping device rotates with the intermediate element, and the output element is coupled to a turbine runner of a hydraulic transmission device so as to rotate with the turbine runner.

7. The damper device according to any one of claims 1 to 6, wherein the intermediate element includes the first and second intermediate elements, the damper device includes a third elastic body that transmits the torque between the first intermediate element and the second intermediate element, and the first elastic body transmits the torque between the input element and the first intermediate element, and the second elastic body transmits the torque between the second intermediate element and the output element.

**8.** The damper device according to any one of claims 1 to 7, wherein
the inertial mass body is an annular member disposed so as to surround the support member, and is rotatably supported by the support member.

**9.** The damper device according to any one of claims 1 to 8, wherein
the vibration damping device includes a plurality of the inertial mass bodies, and
each of the inertial mass bodies is coupled to a support member via the restoring force generating member.

**10.** The damper device according to claim 9, wherein
the vibration damping device further includes a guide mechanism that guides each of the plurality of the inertial mass bodies so that each of the plurality of the inertial mass bodies swings about the rotation center of the support member.

**11.** The damper device according to any one of claims 1 to 10, wherein
the vibration damping device further includes a connecting member that is rotatably coupled to the restoring force generating member via a second coupling shaft and that is rotatably coupled to the inertial mass body via a third coupling shaft.

**12.** The damper device according to claim 11, wherein
a center of the second coupling shaft is located closer to a center of the coupling shaft than a center of gravity of the restoring force generating member is.

**13.** The damper device according to any one of claims 1 to 12, wherein
the restoring force generating member is formed so that its width gradually increases from a coupling shaft-side end of the restoring force generating member toward an opposite end of the restoring force generating member from the end.

**14.** The damper device according to claim 13, wherein
the restoring force generating member includes at least one plate member having a shape of a fan as viewed in plan.

**15.** The damper device according to any one of claims 1 to 14, wherein
the output element is operatively coupled to an input shaft of a transmission.

**16.** A damper device including an input element to which torque from an engine is transmitted, an output element, and an elastic body that transmits the torque between the input element and the output element, comprising:

a vibration damping device including a support member that coaxially rotates with the output element, a restoring force generating member that is coupled to the support member via a coupling shaft and that can swing about the coupling shaft when the support member is rotated, and an inertial mass body that is coupled to the support member via the restoring force generating member and that swings about a rotation center of the support member together with the restoring force generating member when the support member is rotated.

**17.** The damper device according to claim 16, wherein the output element is coupled to a turbine runner of a hydraulic transmission device so as to rotate with the turbine runner.

FIG. 1

# FIG. 2

# FIG. 3

# FIG. 4

# FIG. 5

# FIG. 6

# FIG. 7

# FIG. 8

# FIG. 9

# FIG. 10

EP 3 163 117 A1

FIG. 11

24

FIG. 12

FIG. 13

# FIG. 14

## INTERNATIONAL SEARCH REPORT

International application No.

PCT/JP2015/077206

| A. CLASSIFICATION OF SUBJECT MATTER |
|---|
| *F16F15/14*(2006.01)i, *F16F15/22*(2006.01)i, *F16F15/31*(2006.01)i |

According to International Patent Classification (IPC) or to both national classification and IPC

| B. FIELDS SEARCHED |
|---|
| Minimum documentation searched (classification system followed by classification symbols)<br>F16F15/14, F16F15/22, F16F15/31 |
| Documentation searched other than minimum documentation to the extent that such documents are included in the fields searched<br> Jitsuyo Shinan Koho        1922–1996   Jitsuyo Shinan Toroku Koho   1996–2015<br> Kokai Jitsuyo Shinan Koho   1971–2015   Toroku Jitsuyo Shinan Koho   1994–2015 |
| Electronic data base consulted during the international search (name of data base and, where practicable, search terms used) |

### C. DOCUMENTS CONSIDERED TO BE RELEVANT

| Category* | Citation of document, with indication, where appropriate, of the relevant passages | Relevant to claim No. |
|---|---|---|
| A | JP 2001-263424 A  (Valeo Unisia Transmissions Kabushiki Kaisha),<br>26 September 2001 (26.09.2001),<br>fig. 1 to 3<br>(Family: none) | 1-17 |
| A | JP 01-182651 A  (Nissan Motor Co., Ltd.),<br>20 July 1989 (20.07.1989),<br>fig. 1 to 7<br>(Family: none) | 1-17 |

☒ Further documents are listed in the continuation of Box C.     ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search<br>    09 December 2015 (09.12.15) | Date of mailing of the international search report<br>    22 December 2015 (22.12.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (July 2009)

**INTERNATIONAL SEARCH REPORT**

| International application No. |
|---|
| PCT/JP2015/077206 |

C (Continuation).   DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 57086/1988(Laid-open No. 166155/1989) (Mitsubishi Motors Corp.), 21 November 1989 (21.11.1989), fig. 1 to 4 (Family: none) | 1-17 |
| A | US 5836217 A  (FICHTEL & SACHS AG), 17 November 1998 (17.11.1998), fig. 1 to 5 & US 5836217 A          & GB 2315112 A & GB 9714367 A0          & DE 19627764 A & FR 2751043 A          & ES 2151782 A | 1-17 |

Form PCT/ISA/210 (continuation of second sheet) (July 2009)

**EP 3 163 117 A1**

## REFERENCES CITED IN THE DESCRIPTION

**Patent documents cited in the description**

- JP 2001263424 A